(19) **Europäisches Patentamt / European Patent Office / Office européen des brevets**

(11) **EP 4 492 501 A1**

(12) # EUROPEAN PATENT APPLICATION
published in accordance with Art. 153(4) EPC

(43) Date of publication:
**15.01.2025 Bulletin 2025/03**

(21) Application number: **22941064.2**

(22) Date of filing: **10.05.2022**

(51) International Patent Classification (IPC):
**H01M 4/62** $^{(2006.01)}$ **H01M 10/613** $^{(2014.01)}$

(52) Cooperative Patent Classification (CPC):
**H01M 4/62; H01M 10/613;** Y02E 60/10

(86) International application number:
**PCT/CN2022/091947**

(87) International publication number:
**WO 2023/216100 (16.11.2023 Gazette 2023/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Limited**
**Ningde, Fujian 352100 (CN)**

(72) Inventors:
• **LUO, Chenxu**
  **Ningde, Fujian 352100 (CN)**

• **HE, Jianfu**
  **Ningde, Fujian 352100 (CN)**
• **SUN, Xueyang**
  **Ningde, Fujian 352100 (CN)**
• **LIU, Qian**
  **Ningde, Fujian 352100 (CN)**
• **YE, Yonghuang**
  **Ningde, Fujian 352100 (CN)**

(74) Representative: **Gong, Jinping**
**CocreateIP**
**Neumarkterstr. 21**
**81673 München (DE)**

(54) **BATTERY PACK AND ELECTRIC DEVICE**

(57)    The present application relates to a battery pack and an electrical apparatus. The battery pack comprises a battery box and a first battery cell and a second battery cell disposed in the battery box, wherein a heat dissipation capability at a position where the first battery cell is located is greater than a heat dissipation capability at a position where the second battery cell is located, an addition amount W1 of a lithium replenishing agent in the first battery cell is greater than an addition amount W2 of the lithium replenishing agent in the second battery cell, W1 > 0, and W2 ≥ 0.

**FIG. 2**

**EP 4 492 501 A1**

## Description

## Technical Field

The present application relates to the field of batteries, and in particular, to a battery pack and an electrical apparatus.

## Background

Secondary batteries such as lithium-ion batteries are accompanied by a certain degree of capacity loss during use, which will result in life fade. Among them, secondary batteries such as lithium-ion batteries are greatly affected by temperature during use, and especially under low-temperature conditions, the available capacity of the battery cell decreases significantly, and the low-temperature power performance deteriorates rapidly.

Inside the battery pack, as the number of secondary batteries in the battery pack increases, the increase in the volume and power of the battery pack will further amplify the difference in temperature rise between the interior of the battery pack and the exterior region close to the edge, thereby making the difference in capacity between the battery cells obvious, which leads to the inability to ensure the balance of battery capacities, and thus leads to the problem of the poor overall performance of the battery pack.

## Summary of the Invention

In view of the above problem, the present application provides a battery pack and an electrical apparatus capable of improving the capacity balance between battery cells and thereby improving the overall performance.

In a first aspect, the present application provides a battery pack comprising a battery box and a first battery cell and a second battery cell disposed in the battery box,

wherein a heat dissipation capability at a position where the first battery cell is located is greater than a heat dissipation capability at a position where the second battery cell is located, an addition amount W1 of a lithium replenishing agent in the first battery cell is greater than an addition amount W2 of the lithium replenishing agent in the second battery cell, $W1 > 0$, and $W2 \geq 0$.

In a first aspect, the present application further provides a battery pack comprising a battery box and a first battery cell and a second battery cell disposed in the battery box,

wherein the temperature of the first battery cell is lower than the temperature of the second battery cell due to a heat dissipation difference in the battery box, an addition amount W1 of a lithium replenishing agent in the first battery cell is greater than an addition amount W2 of the lithium replenishing agent in the second battery cell, $W1 > 0$, and $W2 \geq 0$.

Compared to the prior art, the present application at least includes the beneficial effects described below:

In the present application, first battery cells and second battery cells with different lithium replenishing agent contents are arranged in a battery pack by regions, and lithium loss is compensated by the lithium replenishing agent, wherein different lithium replenishing effects can be achieved by different lithium replenishing agent contents, so that the settings of different contents of the lithium replenishing agent for the battery cells are customized with respect to capacity loss differences between the battery cells due to temperature differences brought about by the layout positions. Specifically, for a position with a higher heat dissipation capability, a battery cell arranged thereon has a greater lithium replenishing agent content; conversely, for a position with a lower heat dissipation capability, a battery cell arranged thereon has a relatively smaller lithium replenishing agent content. In this way, the effect of differentiated compensation for the lithium losses of battery cells is achieved, which then increases the capacity balance between the battery cells.

The above battery pack can achieve the effect of capacity self-balancing as far as possible through the battery cell design of battery cells by means of the activation of the lithium replenishing agent without balancing intervention from the BMS system and assistance from redundant components such as self-heating devices, so that the discharging capacity of each of the battery cells inside the battery pack can be maintained in good consistency at room temperatures or at low temperatures, thus improving the overall performance of the battery pack.

In any implementation of the present application, the first battery cell and the second battery cell are both formed by adding different contents of the lithium replenishing agent to battery cells of the same chemical system and with the same capacity.

In any implementation of the present application, the lithium replenishing agent is added to positive electrode active material layers of the battery cells, and the addition amounts are mass contents of the lithium replenishing agent in corresponding positive electrode active material layers. By regulating the addition amount of the lithium replenishing agent in the positive electrode active material layer of the battery cell, the capacity of the battery cell can be regulated very easily and flexibly.

In any implementation of the present application, the addition amounts of the lithium replenishing agent in the first battery cell and the second battery cell are both not higher than 25%.

In any implementation of the present application, a discharging capacity difference between the second battery cell and the first battery cell due to a heat dissipation difference between the positions where they are located is $\Delta C$, a difference in recovery capacity for a positive electrode active material between the first battery cell and the second battery cell due to a difference in addition amounts of the lithium replenishing agent is $\Delta D$, and a difference in normal discharging capacity between the first battery cell and the second battery cell due to the difference in addition amounts of the lithium replenishing agent is $\Delta E$, with $\Delta C$, $\Delta D$, and $\Delta E$ satisfying the following condition:

$\Delta C = \Delta D + \Delta E$. In this way, the sum of the difference in recovery capacity for the positive electrode active material due to the difference in the added lithium replenishing agent and the difference in normal discharging capacity exactly compensates for the difference in discharging capacity due to the different positions in the battery pack. In this way, the balance of capacity between battery cells is achieved.

In any implementation of the present application, a temperature difference between the second battery cell and the first battery cell due to a heat dissipation difference is $\Delta T$, and a difference in addition amounts of the lithium replenishing agent between the first battery cell and the second battery cell is $\Delta W$, $\Delta W = W1 - W2$, with $\Delta T$ and $\Delta W$ satisfying the following condition:

when $0 < \Delta T \leq 5°C$, $0 < \Delta W \leq 6\%$; and
when $5 < \Delta T \leq 10°C$, $6\% < \Delta W \leq 15\%$.

In any implementation of the present application,

when $0 < \Delta T \leq 5°C$, $2\% \leq \Delta W \leq 4\%$; and
when $5 < \Delta T \leq 10°C$, $6\% \leq \Delta W \leq 12\%$.

In any implementation of the present application, the chemical formula of the lithium replenishing agent is $Li_{1+x}M_yA_z$,

wherein M is selected from at least one of Ni, Co, Mn, Mo, Ru, Fe and Ti; and
A is selected from at least one of O, F, S, P and Cl.

In any implementation of the present application, $0 < x \leq 5$, $0.10 < y < 2$, and $2 \leq z \leq 4$.

In any implementation of the present application, a first-cycle coulombic efficiency of the lithium replenishing agent is set to e, e satisfying the following condition: $0.2 \leq e \leq 0.95$.

In any implementation of the present application, in the battery box:

the first battery cell is located on an outer side of the second battery cell;
or a heat exchange area between the first battery cell and the battery box is greater than a heat exchange area between the second battery cell and the battery box.

In a third aspect, the present application provides an electrical apparatus comprising the battery pack in the above embodiments, the battery pack being configured to provide electric energy.

The above description is only a summary of the technical solutions of the present application. In order to be able to understand the technical means of the present application more clearly, the technical means can be implemented according to the content of the specification. Furthermore, to make the above and other objectives, features and advantages of the present application more comprehensible, specific implementations of the present application are exemplified below.

**Description of Drawings**

By reading the detailed description of the preferred implementations below, various other advantages and benefits will become apparent to those of ordinary skill in the art. The drawings are for the purpose of illustrating the preferred implementations only and are not to be considered a limitation to the present application. Moreover, in all of the drawings, the same components are indicated by the same reference signs. In the drawings:

Fig. 1 is a schematic diagram of a battery pack according to an implementation of the present application.
Fig. 2 is a schematic diagram of the layout of battery cells in a battery pack according to a conventional implementation.
Fig. 3 is a schematic diagram of the layout of an implementation of the battery cells in the battery pack shown in Fig. 1.

Fig. 4 is a schematic diagram of the layout of another implementation of the battery cells in the battery pack shown in Fig. 1.

Fig. 5 is a schematic diagram of the layout of another implementation of the battery cells in the battery pack shown in Fig. 1.

Fig. 6 is a schematic diagram of an electrical apparatus in which a battery pack is used as a power source according to an implementation of the present application.

Description of reference numerals:
10. battery pack; 11. first battery cell; 12. second battery cell; 13. third battery cell; 14. fourth battery cell.

**Detailed Description**

Embodiments of the technical solutions of the present application will be described in detail below in conjunction with the drawings. The following embodiments are only used to more clearly illustrate the technical solution of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application; the terms used herein are intended only for the purpose of describing specific embodiments and are not intended to limit the present application; the terms "including" and "having" and any variations thereof in the specification and the claims of the present application and in the description of drawings above are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is only an association relationship for describing associated objects, indicating that there may be three relationships, for example A and/or B may represent three situations: A exists alone, both A and B exist, and B exists alone. In addition, the character "/" herein generally means that the associated objects before and after it are in an "or" relationship.

In the description of the embodiments of the present application, the term "a plurality of" refers to two or more (including two), and similarly, "multiple groups" refers to two or more (including two) groups, and "multiple sheets" refers to two or more (including two) sheets.

In the description of the embodiments of the present application, the orientation or position relationship indicated by the technical terms "center", "longitudinal", "transverse", "length", "width", "thickness", "upper," "lower," "front," "back," "left," "right," "vertical," "horizontal," "top," "bottom," "inner," "outer," "clockwise," "counterclockwise," "axial", "radial", "circumferential", etc., are based on the orientation or position relationship shown in the drawings and are intended to facilitate the description of the embodiments of the present application and simplify the description only, rather than indicating or implying that the device or element referred to must have a particular orientation or be constructed and operated in a particular orientation, and therefore are not to be interpreted as limitations on the embodiments of the present application.

In the description of the embodiments of the present application, unless otherwise expressly specified and limited, the technical terms "mount," "join," "connect," "fix," etc. should be understood in a broad sense, such as, a fixed connection, a detachable connection, or an integral connection; a mechanical connection, or an electrical connection; a direct connection, an indirect connection through an intermediate medium, an internal connection of two elements, or interaction between two elements. For those of ordinary skill in the art, the specific meanings of the above terms in the embodiments of the present application can be understood according to specific situations.

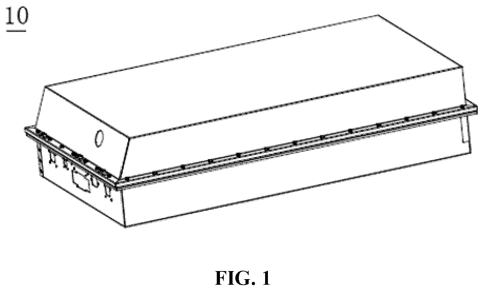

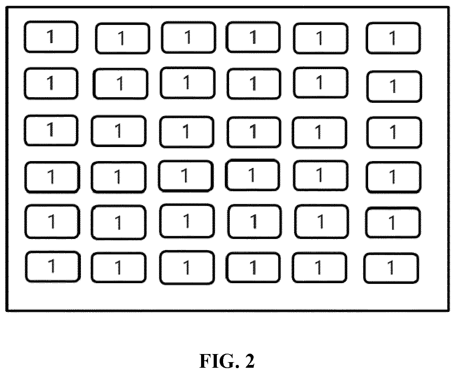

Fig. 1 is a battery pack 1 as an example. Referring to Figs. 1 and 2, the battery pack 10 may include a battery box (not labeled) and a plurality of battery cells disposed in the battery box. The battery box includes an upper box body and a lower box body, wherein the upper box body can cover the lower box body and form an enclosed space for accommodating the plurality of battery cells. The plurality of battery cells may be arranged in the battery box in any manner.

Generally, as shown in Fig. 2, it does not take into account either positional differences or battery cell differences, and it provides one battery cell separately at each position 1 in the battery pack. Further, the battery cells provided at positions 1 are generally the same battery cells. It can be understood that "the same battery cells" herein means that the battery cells are of the same chemical system and have the same battery capacity. Here, the same chemical system mainly means that the materials of the battery cells are the same; further, the form factors of the battery cells may also be the same, for example, they may be of the same model from the same manufacturer.

The technicians of the present application have found that the capacity loss of lithium-ion batteries during use mainly originates from the loss of active lithium and the polarization effect, which then causes life fade. Secondary batteries such as lithium-ion batteries are greatly affected by temperature during use, and especially under low-temperature conditions, the available capacity of the battery cell decreases significantly, and the low-temperature power performance deteriorates rapidly. Therefore, on the one hand, it is possible to reduce the significant reduction of battery cells by increasing the use temperature of the battery cells, and on the other hand, it is possible to avoid the problem of poor overall performance of the battery pack due to the capacity imbalance between the battery cells by reducing the temperature difference between the battery cells due to the layout positions.

Therefore, in general, the method of maintaining the capacity balance of battery cells mainly includes the following approaches:

The first one is to adopt BMS system (also called battery nanny or battery butler) balancing, in which case active balancing has high requirements on the design and configurations of the BMS, while passive balancing will waste part of the battery cell capacity.

The second one is to arrange self-heating devices inside the battery pack to raise the overall temperature of the battery pack so as to improve the battery performance, but this increases the cost, takes up internal space, and cannot achieve self-balancing; and

the third one is to ensure capacity balance between battery cells by laying out battery cells of different chemical systems and arranging batteries with better low-temperature resistant capabilities in regions with higher heat dissipation capabilities.

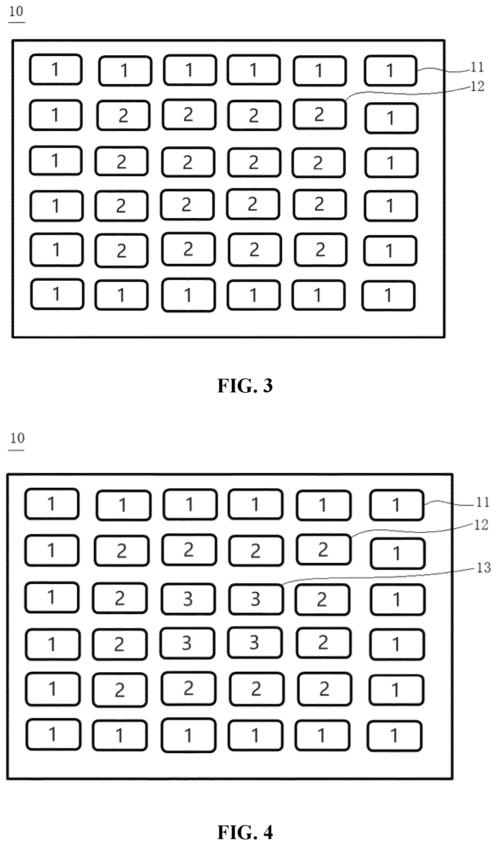

Referring to Fig. 3, a battery pack 10 of an implementation of the present application includes a battery box and a first battery cell 11 and a second battery cell 12 disposed in the battery box.

Here, a heat dissipation capability at position 1 where the first battery cell 11 is located is greater than a heat dissipation capability at position 2 where the second battery cell 12 is located, an addition amount W1 of a lithium replenishing agent in the first battery cell 11 is greater than an addition amount W2 of the lithium replenishing agent in the second battery cell 12, W1 > 0, and W2 ≥ 0.

Compared to the second battery cell 12, for the first battery cell 11, since the temperature decreases more, resulting in a lower degree of utilization of the capacity of the first battery cell 11, the capacity of the first battery cell 11 needs to be increased more in order to improve the discharging capacity of the battery and to ensure that the battery maintains the consistency of the overall performance. Therefore, more lithium replenishing agent is activated in the first battery cell 11. On the one hand, by activating more lithium replenishing agent in the first battery cell 11, the capacity loss caused by temperature difference polarization can be compensated for by more mitigation of the thermodynamic capacity loss caused by lithium loss; on the other hand, since the lithium replenishing agent itself has a greater impedance compared to the positive electrode material of the main body, the addition of more lithium replenishing agent during the charging and discharging processes generates more heat to raise the temperature, thereby mitigating the capacity loss caused by low-temperature polarization.

In the present application, first battery cells and second battery cells with different lithium replenishing agent contents are arranged in a battery pack by regions, and lithium loss is compensated by the lithium replenishing agent, wherein different lithium replenishing effects can be achieved by different lithium replenishing agent contents, so that the settings of different contents of the lithium replenishing agent for the battery cells are customized with respect to capacity loss differences between the battery cells due to temperature differences brought about by the layout positions. Specifically, for a position with a higher heat dissipation capability, a battery cell arranged thereon has a greater lithium replenishing agent content; conversely, for a position with a lower heat dissipation capability, a battery cell arranged thereon has a relatively smaller lithium replenishing agent content. In this way, the effect of differentiated compensation for the lithium losses of battery cells is achieved, which then increases the capacity balance between the battery cells.

The above battery pack can achieve the effect of capacity self-balancing as far as possible through the battery cell design of battery cells by means of the activation of the lithium replenishing agent without balancing intervention from the BMS system and assistance from redundant components such as self-heating devices, so that the discharging capacity of each of the battery cells inside the battery pack can be maintained in good consistency at room temperatures or at low temperatures, thus improving the overall performance of the battery pack.

In the present application, by performing positive electrode lithium replenishment in secondary batteries such as lithium-ion batteries of a battery pack to compensate for lithium losses, the capacity is improved, and this method is easy to operate and has a low cost.

In some of the implementations, as shown in Fig. 3, for a position 1 close to the edge in the battery box and a position 2 on the inner side relative to the position 1, since the position 1 is close to the edge of the battery box, the maximum amount of heat exchange that can be performed at it with the environment outside of the battery box is obviously greater than the maximum amount of heat exchange that can be performed at the position 2 with the environment outside of the battery box. Therefore, the position 1 is a position having a higher heat dissipation capability compared to the position 2, and the position 2 is a position having a lower heat dissipation capability compared to the position 1.

Further, in the battery pack 10, the maximum amount of heat exchange Q1 that can be performed at the position 1 where the first battery cell 11 is located with the environment external to the battery box is greater than the maximum amount of heat exchange Q2 that can be performed at the position 2 where the second battery cell 12 is located with the environment external to the battery box, and the addition amount W1 of the lithium replenishing agent in the first battery cell 11 is greater than the addition amount W2 of the lithium replenishing agent in the second battery cell 12, wherein W1 > 0 and W2≥0.

In some implementations, the first battery cell 11 and the second battery cell 12 are battery cells of the same chemical system. Further, each of the battery cells in the battery box is a battery cell of the same chemical system.

Specifically, the battery cells may be lithium nickel cobalt manganese ternary batteries, lithium nickel cobalt aluminum ternary batteries, lithium iron phosphate batteries, lithium manganese iron phosphate batteries, lithium manganate batteries, lithium nickel manganese oxide batteries, lithium titanate batteries, lithium cobalt oxide batteries among lithium-ion batteries; or Prussian blue batteries, Prussian white batteries, metal oxides, phosphate batteries among sodium-ion batteries; or other secondary battery cells. Preferably, the battery cells in the battery box are all battery cells of the same chemical system, such as lithium nickel cobalt manganate ternary batteries among lithium-ion batteries.

In some implementations, the battery cells, such as the first battery cell 11 and the second battery cell 12, may be formed by adding different contents of the lithium replenishing agent to the battery cells of the same chemical system and with the same capacity.

In some implementations, the lithium replenishing agent is added to positive electrode active material layers of the battery cells, and the addition amounts are mass contents of the lithium replenishing agent in corresponding positive electrode active material layers. By regulating the addition amount of the lithium replenishing agent in the positive electrode active material layer of the battery cell, the capacity of the battery cell can be regulated very easily and flexibly.

In some implementations, the addition amount of the lithium replenishing agent in each of the battery cells such as the first battery cell and the second battery cell is not higher than 25%, for example, 2%, 3%, 5%, 8%, 10%, 12%, 15%, 18%, 20%, 23%, and 25%. Further, the addition amount of the lithium replenishing agent in each of the battery cells such as the first battery cell and the second battery cell is 2% to 15%, or 5% to 10%.

In some implementations, a discharging capacity difference between the second battery cell and the first battery cell due to a heat dissipation difference between the positions where they are located is $\Delta C$, a difference in recovery capacity for a positive electrode active material between the first battery cell and the second battery cell due to a difference in addition amounts of the lithium replenishing agent is $\Delta D$, and a difference in normal discharging capacity between the first battery cell and the second battery cell due to the difference in addition amounts of the lithium replenishing agent is $\Delta E$, with $\Delta C$, $\Delta D$, and $\Delta E$ satisfying the following condition:

$$\Delta C = \Delta D + \Delta E.$$

In the above equation, the left side of the equation is the discharging capacity difference due to different positions in the battery pack; and the right side of the equation is the sum of the difference in recovery capacity for the positive electrode active material due to the lithium replenishment of the addition amount of the lithium replenishing agent and the difference in normal discharging capacity. The equation holds, which means that: the sum of the difference in recovery capacity for the positive electrode active material due to the difference in the added lithium replenishing agent and the difference in normal discharging capacity exactly compensates for the difference in discharging capacity due to the different positions in the battery pack. In this way, the balance of capacity between battery cells is achieved.

Specifically, the discharging capacities of the first battery cell and the second battery cell affected by the heat dissipation of the positions where they are located are denoted as C1 and C2, respectively; then $\Delta C=C2-C1$. The recovery capacities of the positive electrode active materials of the first battery cell and the second battery cell due to the addition amounts of the lithium replenishing agent are denoted as D1 and D2, respectively; then $\Delta D = D1 - D2$. The normal discharging capacities of the first battery cell and the second battery cell due to the addition amounts of the lithium replenishing agent are denoted as E1 and E2, respectively; then $\Delta E = E1 - E2$. Then:

$$C2 - C1 = D1 - D2 + E1 - E2.$$

Further, if the recovery capacities of the positive electrode active materials of the first battery cell and the second battery cell due to lithium replenishment of a unit mass of lithium replenishing agent are denoted as d1 and d2, respectively; and the first battery cell and the second battery cell are added with W1 and W2, respectively, then D1 = W1d1 and D2 = W2d2.

Further, if the normal discharging capacities of the first battery cell and the second battery cell due to lithium replenishment of a unit mass of lithium replenishing agent are denoted as e1 and e2, respectively; and the first battery cell and the second battery cell are added with W1 and W2, respectively, then E1 = W1e1 and E2 = W2e2.

Further, C2 - C1 = W1d1 - W2d2 -+ W1e1 - W2e2.

By analogy, extrapolation is performed to the Nth type of battery cell, then

$$C_i\text{-}C_{i-1}=W_iD_i\text{-}W_{i-1}D_{i-1}+W_iE_i\text{-}W_{i-1}E_{i-1}.$$

It can be understood that the discharging capacity difference between the second battery cell and the first battery cell due to the heat dissipation difference between the positions where they are located is $\Delta C$, which is in fact the temperature difference between the second battery cell and the first battery cell per se due to the heat dissipation difference, meaning that the temperature difference between the second battery cell and the first battery cell due to the heat dissipation difference is $\Delta T$, and this temperature difference then leads to the discharging capacity difference. In other words, $\Delta C$ on the left side of the above equation is a parameter related to $\Delta T$. In contrast, d1, d2, e1, and e2 may also be considered constant in battery cells of the same chemical system; therefore, the right side of the above equation shows parameters related to W1 and W2.

Therefore, in combination with specific examples and empirical studies of the technicians of the present application, in some implementations, the temperature difference between the second battery cell and the first battery cell due to a heat dissipation difference is $\Delta T$, and a difference in addition amounts of the lithium replenishing agent between the first battery cell and the second battery cell is $\Delta W$, $\Delta W=W1-W2$, with $\Delta T$ and $\Delta W$ satisfying the following conditions:

When $0 < \Delta T \leq 5°C$, $0 < \Delta W \leq 6\%$; preferably, $2\% \leq \Delta W \leq 4\%$.
When $5 < \Delta T \leq 10°C$, $6\% < \Delta W \leq 15\%$; preferably, $6\% \leq \Delta W \leq 12\%$.

In some implementations, the chemical formula of the lithium replenishing agent is $Li_{1+x}M_yA_z$,

wherein M is selected from at least one of the transition metal elements Ni, Co, Mn, Mo, Fe, Ru, and Ti; and
A is selected from at least one of the non-metallic elements O, F, S, and Cl.

It can be understood that it is sufficient that the values of x, y and z can be taken such that the valence of the above compound is 0. In some implementations, $0 < x \leq 5$, $0.10 < y < 2$, and $2 < z \leq 4$. Preferably, $0 < x \leq 4$, $0.1 \leq x \leq 0.5$, and more preferably $0.1 \leq x \leq 0.3$. Preferably $0.55 \leq y \leq 0.90$, and more preferably $0.65 \leq y \leq 0.85$. Preferably, $3.5 \leq z \leq 4$ or $z=2$.

Further, the lithium replenishing agent may include, but is not limited to, at least one of the following: $Li_{1.47}Mn_{1.6}O_{3.7}F_{0.3}$, $Li_2Mn_2O_4$, $Li_{1.16}Ni_{0.22}Mn_{0.6}O_2$, $Li_{1.13}Ni_{0.07}Co_{0.14}Mn_{0.58}O_2$, $Li_2Ni_{0.1}Cu_{0.9}O_2$, $Li_2Ni_{0.4}Cu_{0.55}Mg_{0.05}O_2$, $Li_6CoO_4$, $Li_6NiO_4$, $Li_6MnO_4$, $Li_6FeO_4$, $Li_5FeO_4$.

In some implementations, a first-cycle coulombic efficiency of the lithium replenishing agent is set to e, e satisfying the following condition: $0.2 \leq e \leq 0.95$.

Provisions for the time of activation of the lithium replenishing agent: on the basis of the introduction of the lithium-rich lithium replenishing agent, it can be activated in the first cycle, or activated and added by time stages and voltage gradients during the battery cycle, so as to achieve accurate lithium replenishment while improving the performance of the battery and reducing the loss of energy density, wherein the first-cycle charging voltage can be selected from various potentials ranging from 3.75 to 5V according to the type of the lithium replenishing agent.

In some implementations, the lithium replenishing agent is activated to perform lithium replenishment of the battery cell in the event that the state of health (SOH) value of the battery cell is less than or equal to a preset threshold, wherein the state of health (SOH) value of the battery cell is acquired by: acquiring the state of health (SOH) value of the battery cell under the condition that the battery cell is at a preset charging node.

Here, the preset charging node may be any one of at least two charging nodes provided according to experimental data such as the cycling life or capacity fade situation of the battery cell. Specifically, the preset charging node may be a time node or a cycle number node with much active lithium loss predicted based on the above experimental data.

The SOH denotes the remaining battery life of the battery cell at the current moment, which has a meaning known in the art. Specifically, the SOH can be defined based on the cycling life or based on the capacity fade.

The above preset threshold is a preset SOH value for measuring the degree of loss of active lithium in the battery cell. When the SOH is less than or equal to the preset threshold, the battery cell can be considered to be in a state in which it needs to be replenished with active lithium, and at this time the lithium replenishing material can be activated to replenish lithium to the battery cell. The lithium replenishing material may be activated by various means. For example, the lithium replenishing material may be activated by, e.g., increasing the charging voltage or charging rate, or increasing the temperature, or may be activated by charging and discharging at a certain voltage or rate. Further, the charging voltage may be 3.75-5V.

In the case where the initial temperatures throughout the battery box are the same and the battery box is placed in the same external environment, with the heat exchange between the battery box and the external environment, due to the difference in the heat dissipation capability between different positions inside the battery box (or the difference in the maximum amount of heat exchange that can be performed with the external environment of the battery box), the temperature difference brought about by the layout positions inside the battery box will gradually appear. For example, in the example shown in Fig. 3, the temperature at the position 2 may be higher than the temperature at the position 1, resulting in a temperature difference. Since the capacity of the battery cell decreases significantly under low-temperature conditions, if the battery pack is in a low-temperature condition, the temperature at the position 1 will be significantly lower than the temperature at the position 2; moreover, if the battery cells provided at the positions 1 and 2 are the same battery cells, the capacity of the battery cell provided at the position 1 at this time will be significantly lower than the capacity of the battery cell provided at the position 2 due to the decrease in temperature.

The present application takes this factor into account in advance and adds the lithium replenishing agent in a targeted manner to compensate for this difference. Therefore, the first battery cell 11 is provided at the position 1, and the second battery cell 12 is provided at the position 2, and the addition amount W1 of the lithium replenishing agent in the first battery battery 11 is made greater than the addition amount W2 of the lithium replenishing agent in the second battery cell 12, so that the capacity of each of the battery cells can withstand a certain magnitude of change in the temperature difference, thereby achieving capacity self-balancing.

In the present application, only the influence of the positional differences on the heat dissipation capability are considered, then the heat dissipation capability of an outer position close to the edge in the battery box is better than that of an inner position far from the edge. For example, as shown in Fig. 4, the position 1 is an outer position closer to the edge relative to the position 2, so that the heat dissipation capability of the position 1 is better than the heat dissipation capability of the position 2; and the position 2 is an outer position closer to the edge relative to the position 3, so that the heat dissipation capability of the position 3 is better than the heat dissipation capability of the position 2.

Further, in the example as shown in 4, a first battery cell 11 is provided at the position 1, a second battery cell 12 is provided at the position 2, and a third battery cell 13 is provided at the position 3; at this time, the addition amounts of the lithium replenishing agent in the first battery battery 11, the second battery cell 12, and the third battery cell 13 are W1, W2, and W3, respectively, then W1>W2>W3, W1>0, W2>0, and W3 $\geq$ 0.

In the present application, only the influence of the positional differences on the heat dissipation capability are considered, and for the outermost position of the battery cell arranged on the outermost side, since the heat can be exchanged more directly between the battery cell thereon and the battery box compared to the internal battery cells, and there also exist differences in the heat exchange area between different positions on the outermost side and the battery box. A position having a larger heat exchange area with the battery box has a better heat dissipation capability than a position having a smaller heat exchange area with the battery box.

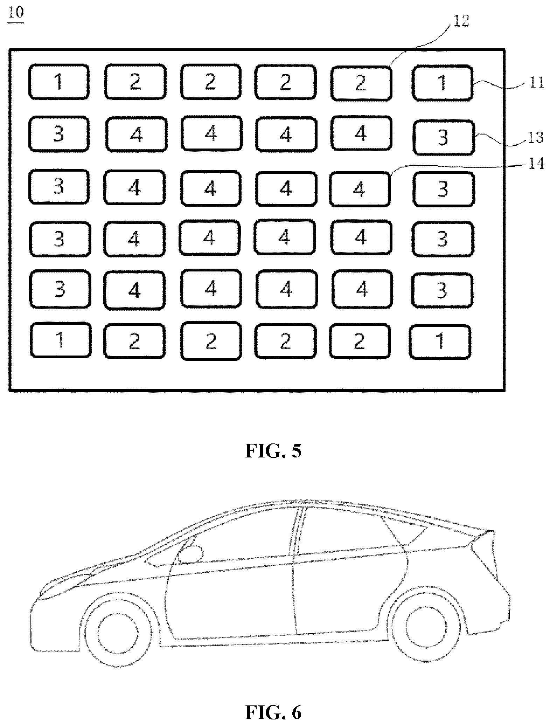

For example, as shown in Fig. 5, as described above, the positions 1-3 are outer positions closer to the edge relative to the position 4, and the heat dissipation capabilities of the positions 1-3 are better than the heat dissipation capability of the position 2. Moreover, among the positions 1-3, as can be seen from the comparison of the position 1 with the positions 2-3, the position 1 is located at a corner position of the battery box, and the positions 2-3 are located at non-corner positions of the side walls of the battery box. Compared to the positions 2 to 3, the heat exchange area between the position 1 and the battery box is larger than the heat exchange areas between the positions 2-3 and the battery box. Therefore, compared to the positions 2-3, the position 1 has a greater heat dissipation capability.

Further, in the example as shown in 5, a first battery cell 11 is provided at the position 1, a second battery cell 12 is provided at the position 2, a third battery cell 13 is provided at the position 3, and a fourth battery cell 14 is provided at the position 4; at this time, the addition amounts of the lithium replenishing agent in the first battery battery 11, the second battery cell 12, the third battery cell 13, and the fourth battery cell 14 are W1, W2, W3, and W4, respectively, then W1 > W2 > W4, W1 > W3 > W4, W1 > 0, W2 > 0, and W4 $\geq$ 0.

As for W1 and W2, they may be set to be the same or different according to the actual situation.

In summary, if the heat dissipation capability of the position where the first battery cell is located is greater than the heat dissipation capability of the second battery battery, they may be in, but not limited to, several arrangements as follows.

Arrangement one: in the battery box, the first battery cell is located on an outer side of the second battery cell.

Arrangement two: in the battery box, a heat exchange area between the first battery cell and the battery box is greater than a heat exchange area between the second battery cell and the battery box.

As in any of the above arrangements, it is possible to achieve the effect that the heat dissipation capability of the position where the first battery cell is located is greater than the heat dissipation capability of the second battery battery.

Further, in some examples, as shown in Fig. 5, the battery cells arranged in the outermost positions 1-2 inside the battery box are constructed to be in direct contact with the interior of the battery box. At this time, the heat exchange area between the battery cell and the battery box mainly considers the contact area between the battery cell and the battery box. That is, in the battery box, the contact area of the first battery cell with the battery box is greater than the contact area of the second battery cell with the battery box, then the heat dissipation capability of the position where the first battery cell is located is greater than the heat dissipation capability of the second battery battery.

In addition, the present application further provides an electrical apparatus comprising at least one of the battery packs provided in the present application. The battery pack can be used as a power source for the electrical apparatus or as an energy storage unit for the electrical apparatus. The electrical apparatus may include, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, an energy storage system, etc.

As the electrical apparatus, the battery pack can be selected according to its usage requirements.

Fig. 6 is an example electrical apparatus. The electrical apparatus is an all-electric vehicle, a hybrid electric vehicle, a plug-in hybrid electric vehicle, or the like. In order to meet the demand for high power and high energy density of secondary batteries for this electrical apparatus, battery packs or battery modules may be used.

As another example, the apparatus may be a mobile phone, a tablet, a laptop, etc. The apparatus is usually required to be lightweight and thin, and can use a secondary battery as the power source.

The embodiments described below are exemplary and are used only to explain the present application and are not to be construed as limiting the present application. Where specific techniques or conditions are not indicated in the embodiments, they are in accordance with the techniques or conditions described in the literature in the field or in accordance with the product specification. The reagents or instruments used without indication of the manufacturer are all conventional products that are commercially available.

Description of test information

1) Test of the battery cell capacity C: the initial discharging capacity of a battery cell is defined as the capacity for discharging from the cut-off upper limit voltage of each battery cell to the cut-off lower limit voltage of each battery cell at 0.33C under the standard test temperature (-20°C/0°C).

2) Test of the discharging capacity d recovered after lithium replenishment with a unit mass of lithium replenishing agent: without considering that the lithium replenishing agent itself releases a capacity, only that the lithium replenishing agent is used for recovering the capacity of the positive electrode active material lost due to the absence of lithium ions is taken into account. At this point, $d = (Cap-Cap_0/W)$, where $Cap_0$ is the discharging capacity of the battery before receiving lithium replenishment, Cap is the discharging capacity of the battery after receiving lithium replenishment, and W is the mass content of the lithium replenishing agent in the positive electrode active material layer. Among them, Cap and $Cap_0$ may be obtained using the above described test for the battery cell capacity C.

3) The battery cell capacity retention ratio: the battery cell in a fully charged state is placed in a thermostat and left to rest for 2h, and the battery cell is discharged to its lower limit cut-off voltage at a rate of 0.33C, at which time the capacity is recorded to obtain the battery cell capacity retention ratio.

Comparative Example 1

At all positions in the battery box of the battery pack of Comparative Example 1, the same battery cells (with the same chemical system, the same capacity, and the same material and dimensions) are placed; as shown in Fig. 3, the battery cell at the position 1 (the most edged region close to the battery box) is denoted as the first battery cell 11, and the battery cell at the position 2 (located in the middle of the most edged region of the battery box) is denoted as the second battery cell 12, at which time the temperature of the environment in which the battery box is located is -20°C. In other words, the battery cells are the same, and have the same cell capacity and do not have a lithium replenishing agent added to their positive electrode active material layers. However, due to the difference in the positions of the first battery cell and the second battery cell in the battery box, there is a temperature difference between the first battery cell and the second battery cell due to heat dissipation, and further, a difference in the capacities of the battery cells is caused due to the temperature difference, $0°C < \Delta T \leq 5°C$, which is specifically as shown in Table 1.

Here, the timing of testing the temperature of the battery cell before lithium replenishment is the same or not much different from that of testing the capacity of the battery cell before lithium replenishment. Specifically, the temperature of the battery cell before lithium replenishment is obtained by attaching a temperature sensing wire to a middle position of the outer casing of the battery cell, and the temperature acquisition time is detected when the battery box in which the battery cells have been laid out is placed at a corresponding ambient temperature for 120 min, at which time a thermal balance state is considered to be reached.

Specifically, in Comparative Example 1, the positive electrode active material layers in both the first battery cell and the second battery cell are of the NCM523 system.

Comparative Example 2

The battery pack of Comparative Example 2 is substantially the same as that of Comparative Example 1, differing only in that the materials and dimensions of the battery boxes are slightly different, which then makes the temperature difference between the first battery cell and the second battery cell before lithium replenishment to satisfy: $5°C < \Delta T \leq 10°C$.

Embodiment 1

The battery pack of Embodiment 1 is substantially the same as that of Comparative Example 1, differing in that the lithium replenishing agents in amounts W1 and W2 are added to the positive electrode active material layers of the first battery cell and the second battery cell, respectively, on the basis of Comparative Example 1.

Specifically, the lithium replenishing agent has a chemical formula of $Li_{1.47}Mn_{1.6}O_{3.7}F_{0.3}$, and a first-cycle coulombic efficiency e of 60% (the definition of the first coulombic efficiency is: the ratio of the first-cycle discharging capacity to the first-cycle charging capacity for a unit mass of lithium replenishing agent). That is, Embodiment 1 uses a first battery cell and a second battery cell to which lithium replenishing agents of amounts W1 and W2 have been added to replace the first battery cell and the second battery cell in Comparative Example 1, respectively.

The testing procedure for the coulombic efficiency of the lithium replenishing agent is: H2/H1*100%, wherein the discharging specific capacity H1 of the lithium replenishing agent is: for a unit mass of additive within the lithium replenishment voltage range, the capacity for charging from the cut-off lower limit voltage of the lithium replenishing additive to the cut-off upper limit voltage of each battery cell at 0.33C at the standard test temperature (-20°C/0°C); and the discharging specific capacity H2 of the lithium replenishing agent is: for a unit mass of additive within the lithium replenishment voltage range, the capacity for discharging from the cut-off upper limit voltage of the lithium replenishing additive to the cut-off lower limit voltage of each battery cell at 0.33C at the standard test temperature (-20°C/0°C). The following is similar.

Embodiment 2

The battery pack of Embodiment 2 is substantially the same as that of Comparative Example 2, differing in that the lithium replenishing agents in amounts W1 and W2 are added to the positive electrode active material layers of the first battery cell and the second battery cell, respectively, on the basis of Comparative Example 2.

The test results of the overall available capacity of the battery pack at 25°C, the temperature of the battery cell before lithium replenishment, the capacity of the battery cell before lithium replenishment, the overall available capacity of the battery pack before lithium replenishment, the lithium replenishing agent amount W in each of the battery cells (the mass content of the lithium replenishing agent in the positive electrode active material layer), the capacity of the battery cell after lithium replenishment, the overall available capacity of the battery pack after lithium replenishment, and the improvement in the battery pack capacity retention ratio for Comparative Examples 1-2 and Embodiments 1-2 are as shown in Table 1.

Among them, the overall available capacity of the battery pack is the smaller one of the actual capacities of the first battery cell and the second battery cell in the battery pack, i.e., the smallest value among the battery cells in the battery pack. For example, the overall available capacity of the battery pack before lithium replenishment is the smaller one of the actual capacities of the first battery cell and the second battery cell before lithium replenishment. The overall available capacity of the battery pack after lithium replenishment is the smaller one of the actual capacities of the first cell and the second cell after lithium replenishment.

The overall available capacity (Ah) of the battery pack at 25°C refers to the overall available capacity of the corresponding battery pack at 25°C before lithium replenishment, so the Comparative Examples and Embodiments in Table 1 are equivalent.

The overall available capacity retention ratio of the battery pack before lithium replenishment refers to the ratio of the overall available capacity of the battery pack at a lower ambient temperature to the overall available capacity of the battery pack at 25°C.

The overall available capacity retention ratio of the battery pack after lithium replenishment is the ratio of the overall available capacity of the battery pack at a lower ambient temperature after lithium replenishment to the overall available capacity of the battery pack at 25°C.

In the table, the lithium replenishing agent is activated by the first-cycle charging voltage of 4.4 V after being added.

The lithium replenishment SOH (preset threshold) is used to define the time to activate the lithium replenishing agent and the lithium replenishment SOH (preset threshold) is defined based on the capacity degradation, specifically in the table as a preset value of the overall available capacity retention ratio of the battery pack. Taking the lithium replenishment SOH (preset threshold) being 70% in Table 1 as an example, it means that each of the battery cells in the battery pack is activated when the available capacity retention ratio of the battery pack as a whole at the current moment before lithium replenishment reaches 70%. The available capacity retention ratio of the battery pack as a whole at the current moment is the ratio of the available capacity of the battery pack as a whole at the current moment to the overall available capacity of the battery pack at 25°C.

The improvement in the capacity retention ratio of the battery pack is obtained through: the overall available capacity retention ratio of the battery pack after lithium replenishment - the overall available capacity retention ratio of the battery pack before lithium replenishment.

The above parameters have the same or similar meanings in Table 2.

Table 1

| Items | | Comparative Example 1 | Comparative Example 2 | Embodiment 1 | Embodiment 2 |
|---|---|---|---|---|---|
| Overall available capacity of battery pack at 25°C (Ah) | | 60 | 60 | 60 | 60 |
| Before lithium replenishment | Temperature of first battery cell (°C) | -20 | -20 | -20 | -20 |
| | Temperature of second battery cell (°C) | -16 | -12 | -16 | -12 |
| | Capacity of first battery cell (Ah) | 45 | 45 | 45 | 45 |
| | Capacity of second battery cell (Ah) | 50 | 53 | 50 | 53 |
| | Overall available capacity of battery pack (Ah) | 45 | 45 | 45 | 45 |
| | Overall available capacity retention ratio of battery pack before lithium replenishment | 75% | 75% | 75% | 75% |
| Lithium replenishment | Lithium replenishment SOH (preset threshold) | / | / | 70% | 70% |
| | Activation voltage (V) | / | / | 4.8 | 4.8 |
| | Additive for first battery cell W1 | / | / | 12wt% | 12wt % |
| | Additive for second battery cell W2 | / | / | 9wt% | 4wt % |

(continued)

| Items | | Comparative Example 1 | Comparative Example 2 | Embodiment 1 | Embodiment 2 |
|---|---|---|---|---|---|
| After lithium replenishment | Capacity of first battery cell (Ah) | / | / | 55 | 55 |
| | Capacity of second battery cell (Ah) | / | / | 55 | 55 |
| | Overall available capacity of battery pack after lithium replenishment (Ah) | / | / | 55 | 55 |
| | Overall available capacity retention ratio of battery pack after lithium replenishment | / | / | 91.6% | 91.6% |
| | Improvement in capacity retention ratio of battery pack | / | / | 16.6% | 16.6% |

Comparative Examples 3-4

The battery pack of Comparative Example 3 is substantially the same as that of Comparative Example 1, i.e., the same battery cells (with the same chemical system, the same capacity, and the same material and dimensions) are placed in all positions in each battery box, differing in that the battery cells of Comparative Example 3 are different from those of Comparative Example 1, and that the ambient temperature for the battery boxes is different, which is specifically 0°C.

Comparative Example 4

The battery pack of Comparative Example 4 is substantially the same as that of Comparative Example 3, differing only in that the materials and dimensions of the battery boxes are slightly different, which then makes the temperature difference between the first battery cell and the second battery cell before lithium replenishment to satisfy: $5°C < \Delta T \leq 10°C$.

Embodiment 3

The battery pack of Embodiment 3 is substantially the same as that of Comparative Example 3, differing in that lithium replenishing agents in amounts W1 and W2 are added to the positive electrode active material layers of the first battery cell and the second battery cell, respectively, on the basis of Comparative Example 3, wherein the lithium replenishing agent specifically has a chemical formula of $Li_{1.47}Mn_{1.6}O_{3.7}F_{0.3}$, and has a first-cycle coulombic efficiency of 60% ( the first-cycle coulombic efficiency is defined as the ratio of the first-cycle discharging capacity to the first-cycle charging capacity for a unit mass of the lithium replenishing agent),

Embodiment 4

The battery pack of Embodiment 4 is substantially the same as that of Comparative Example 4, differing in that lithium replenishing agents in amounts W1 and W2 are added to the positive electrode active material layers of the first battery cell and the second battery cell, respectively, on the basis of Comparative Example 3.

The test results of the overall available capacity of the battery pack at 25°C, the temperature of the battery cell before lithium replenishment, the capacity of the battery cell before lithium replenishment, the overall available capacity of the battery pack before lithium replenishment, the lithium replenishing agent amount W in each of the battery cells (the mass content of the lithium replenishing agent in the positive electrode active material layer), the capacity of the battery cell after lithium replenishment, the overall available capacity of the battery pack after lithium replenishment, and the improvement in the battery pack capacity retention ratio for Comparative Examples 3-4 and Embodiments 3-4 are as shown in Table 2.

Table 2

| Items | | Comparative Example 3 | Comparative Example 4 | Embodiment 3 | Embodiment 4 |
|---|---|---|---|---|---|
| Overall available capacity of battery pack at 25°C (Ah) | | 70 | 70 | 70 | 70 |
| Before lithium replenishment | Temperature of first battery cell (°C) | 0 | 0 | 0 | 0 |
| | Temperature of second battery cell (°C) | 4 | 8 | 4 | 8 |
| | Capacity of first battery cell (Ah) | 55 | 55 | 55 | 55 |
| | Capacity of second battery cell (Ah) | 60 | 65 | 60 | 65 |
| | Overall available capacity of battery pack (Ah) | 55 | 55 | 55 | 55 |
| | Overall available capacity retention ratio of battery pack before lithium replenishment | 79% | 79% | 79% | 79% |
| Lithium replenishment | Lithium replenishment SOH (preset threshold) | / | / | 75% | 75% |
| | Activation voltage (V) | / | / | 4.8 | 4.8 |
| | Additive for first battery cell W1 | / | / | 10wt % | 10wt % |
| | Additive for second battery cell W2 | / | / | 7wt % | 2wt % |
| After lithium replenishment | Capacity of first battery cell (Ah) | / | / | 67 | 67 |
| | Capacity of second battery cell (Ah) | / | / | 67 | 67 |
| | Overall available capacity of battery pack after lithium replenishment (Ah) | / | / | 67 | 67 |
| | Overall available capacity retention ratio of battery pack after lithium replenishment | / | / | 96% | 96% |
| | Improvement in capacity retention ratio of battery pack | / | / | 17% | 17% |

Finally, it should be noted that the above embodiments are merely used for illustrating rather than limiting the technical solutions of the present application. Although the present application has been described in detail with reference to the above various embodiments, those of ordinary skill in the art should understand that the technical solutions specified in the above various embodiments can still be modified, or some or all of the technical features therein can be equivalently substituted; and such modifications or substitutions do not make the essence of the corresponding technical solutions depart from the scope of the technical solutions of the various embodiments of the present application, which shall fall within the scope of the claims and the specification of the present application. In particular, the technical features mentioned in the various embodiments can be combined in any manner as long as there is no structural conflict. The present application is not limited to the specific embodiments disclosed herein, but rather includes all technical solutions falling within the scope of the claims.

**Claims**

1. A battery pack, comprising a battery box and a first battery cell and a second battery cell disposed in the battery box, wherein a heat dissipation capability at a position where the first battery cell is located is greater than a heat dissipation capability at a position where the second battery cell is located, an addition amount W1 of a lithium replenishing agent in the first battery cell is greater than an addition amount W2 of the lithium replenishing agent in the second battery cell, W1 > 0, and W2 $\geq$ 0.

2. A battery pack, comprising a battery box and a first battery cell and a second battery cell disposed in the battery box, wherein the temperature of the first battery cell is lower than the temperature of the second battery cell due to heat dissipation in the battery box, an addition amount W1 of a lithium replenishing agent in the first battery cell is greater than an addition amount W2 of the lithium replenishing agent in the second battery cell, W1 > 0, and W2 $\geq$ 0.

3. The battery pack of any one of claims 1 to 2, wherein the first battery cell and the second battery cell are both formed by adding different contents of the lithium replenishing agent to battery cells of the same chemical system and with the same capacity.

4. The battery pack of claim 3, wherein the lithium replenishing agent is added to positive electrode active material layers of the battery cells, and the addition amounts are mass contents of the lithium replenishing agent in corresponding positive electrode active material layers.

5. The battery pack of claim 4, wherein the addition amounts of the lithium replenishing agent in the first battery cell and the second battery cell are both not higher than 25%.

6. The battery pack of any one of claims 1 to 5, wherein a discharging capacity difference between the second battery cell and the first battery cell due to a heat dissipation difference or a temperature difference between the positions where they are located is $\Delta C$, a difference in recovery capacity for a positive electrode active material between the first battery cell and the second battery cell due to a difference in addition amounts of the lithium replenishing agent is $\Delta D$, and a difference in normal discharging capacity between the first battery cell and the second battery cell due to the difference in addition amounts of the lithium replenishing agent is $\Delta E$, with $\Delta C$, $\Delta D$, and $\Delta E$ satisfying the following condition:

$$\Delta C = \Delta D + \Delta E.$$

7. The battery pack of any one of claims 1 to 5, wherein a temperature difference between the second battery cell and the first battery cell due to heat dissipation is $\Delta T$, and a difference in addition amounts of the lithium replenishing agent between the first battery cell and the second battery cell is $\Delta W$, $\Delta W = W1 - W2$, with $\Delta T$ and $\Delta W$ satisfying the following condition:

when 0 < $\Delta T$ $\leq$ 5°C, 0 < $\Delta W$ $\leq$ 6%; and
when 5 < $\Delta T$ $\leq$ 10°C, 0.06 < $\Delta W$ $\leq$ 15%.

8. The battery pack of claim 7, wherein

when 0 < $\Delta T$ $\leq$ 5°C, 2% $\leq$ $\Delta W$ $\leq$ 4%; and
when 5 < $\Delta T$ $\leq$ 10°C, 6% $\leq$ $\Delta W$ $\leq$ 12%.

9. The battery pack of any one of claims 1 to 8, wherein the chemical formula of the lithium replenishing agent is $Li_{1+x}M_yA_z$,

wherein M is selected from at least one of Ni, Co, Mn, Fe, Mg, Mo, Ru and Ti; and
A is selected from at least one of O, F, S and Cl.

10. The battery pack of claim 9, wherein 0 < x $\leq$ 5, 0.10 < y < 2, and 2 $\leq$ z $\leq$ 4.

11. The battery pack of any one of claims 1 to 10, wherein a first-cycle coulombic efficiency of the lithium replenishing agent is set to e, e satisfying the following condition: $0.2 \leq e \leq 0.9$.

12. The battery pack of any one of claims 1 to 11, wherein in the battery box:

the first battery cell is located on an outer side of the second battery cell;
or a heat exchange area between the first battery cell and the battery box is greater than a heat exchange area between the second battery cell and the battery box.

13. An electrical apparatus comprising the battery pack of any one of claims 1 to 12, the battery pack being used to provide electric energy.

10

**FIG. 1**

**FIG. 2**

10

**FIG. 3**

10

**FIG. 4**

**FIG. 5**

**FIG. 6**

## INTERNATIONAL SEARCH REPORT

| International application No. |
| --- |
| **PCT/CN2022/091947** |

**A.    CLASSIFICATION OF SUBJECT MATTER**

H01M4/62(2006.01)i;H01M10/613(2014.01)i

According to International Patent Classification (IPC) or to both national classification and IPC

**B.    FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; WPABS; DWPI; VEN; ENTXT; CNKI: 电池包, 电池单体, 第一, 第二, 散热, 温度, 补锂剂, 含量, 大于, 小于, battery pack, cell, first, second, heat dissipation, temperature, lithium supplement agent, content, greater than, less than

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 109196710 A (BLUE SOLUTIONS CANADA INC.) 11 January 2019 (2019-01-11) description, paragraphs 2 and 28-56, and figures 1-12 | 1-13 |
| Y | CN 110993933 A (ZHAOQING AOYOU POWER BATTERY CO., LTD.) 10 April 2020 (2020-04-10) description, paragraphs 22-36 | 1-13 |
| Y | CN 109196711 A (BLUE SOLUTIONS CANADA INC.) 11 January 2019 (2019-01-11) description, paragraphs 2-7 and 33-66, and figures 1-14 | 1-13 |
| Y | CN 114242939 A (HUIZHOU EVE ENERGY CO., LTD.) 25 March 2022 (2022-03-25) description, paragraphs 9-92 and 115-127 | 1-13 |
| A | JP 2012160283 A (PANASONIC CORP.) 23 August 2012 (2012-08-23) entire document | 1-13 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 February 2023** | **09 February 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

INTERNATIONAL SEARCH REPORT
Information on patent family members

International application No.

**PCT/CN2022/091947**

| Patent document cited in search report | | | Publication date (day/month/year) | Patent family member(s) | | | Publication date (day/month/year) |
|---|---|---|---|---|---|---|---|
| CN | 109196710 | A | 11 January 2019 | US | 2017170527 | A1 | 15 June 2017 |
| | | | | US | 10224578 | B2 | 05 March 2019 |
| | | | | JP | 2018537836 | A | 20 December 2018 |
| | | | | JP | 6861723 | B2 | 21 April 2021 |
| | | | | CA | 3007834 | A1 | 15 June 2017 |
| | | | | KR | 20180111794 | A | 11 October 2018 |
| | | | | EP | 3387697 | A1 | 17 October 2018 |
| | | | | EP | 3387697 | B1 | 19 August 2020 |
| | | | | WO | 2017096463 | A1 | 15 June 2017 |
| CN | 110993933 | A | 10 April 2020 | None | | | |
| CN | 109196711 | A | 11 January 2019 | US | 2017179553 | A1 | 22 June 2017 |
| | | | | US | 10487033 | B2 | 26 November 2019 |
| | | | | KR | 20180111795 | A | 11 October 2018 |
| | | | | CA | 3007843 | A1 | 15 June 2017 |
| | | | | JP | 2018537837 | A | 20 December 2018 |
| | | | | JP | 6921103 | B2 | 18 August 2021 |
| | | | | WO | 2017096465 | A1 | 15 June 2017 |
| | | | | EP | 3387698 | A1 | 17 October 2018 |
| CN | 114242939 | A | 25 March 2022 | None | | | |
| JP | 2012160283 | A | 23 August 2012 | None | | | |

Form PCT/ISA/210 (patent family annex) (July 2022)